# EUROPÄISCHE PATENTSCHRIFT

(11) **EP 0 892 606 B1**
(45) Veröffentlichungstag und Bekanntmachung des Hinweises auf die Patenterteilung: **11.12.2002**
(21) Anmeldenummer: 97916367.2
(22) Anmeldetag: 21.03.1997
(51) Int. Cl.: A01N 51/00

(54) **MITTEL ZUR BEKÄMPFUNG PARASITIERENDER INSEKTEN UND MILBEN AN MENSCHEN**
PESTICIDE FOR PARASITIC INSECTS AND ACARIDS ON HUMANS
AGENTS POUR LUTTER CONTRE DES INSECTES ET DES ACARIENS PARASITES SUR L'HOMME

(30) Priorität: 03.04.1996 DE 19613334
(43) Veröffentlichungstag der Anmeldung: 27.01.1999
(73) Patentinhaber: Bayer CropScience AG, 40789 Monheim (DE)
(72) Erfinder: SIRINYAN, Kirkor, D-51467 Bergisch Gladbach (DE); HEUKAMP, Ulrich, D-51515 Kürten (DE); DORN, Hubert, D-41225 Wuppertal (DE); STÖCKER, Ronald, Helmut, D-40789 Monheim (DE); SONNECK, Rainer, D-51375 Leverkusen (DE); PETER, Rosemary, River Club 2149 (ZA)
(86) Internationale Anmeldenummer: EP9701427
(87) Internationale Veröffentlichungsnummer: WO97037544

(56) Entgegenhaltungen:
- EP-A- 0 045 424
- EP-A- 0 271 332
- EP-A- 0 682 869
- WO-A-93/24002
- DE-A- 4 443 888
- US-A- 4 497 823
- US-A- 4 960 771
- DATABASE WPI Section Ch, Week 8051 Derwent Publications Ltd., London, GB; Class A82, AN 80-91246C XP002033570 & JP 55 142 073 A (TOYO AEROSOL KOGYO KK) , 6.November 1980
- DATABASE CROPU STN-International STN-accession no. 95-81644, "Pesticide warrant: Gaucho 70 WS" XP002033568 & PFLANZENARZT, Bd. 48, Nr. 20, 1995, Seite 1-2
- DATABASE CROPU STN-International STN-accession no. 97-83407, XP002033569 & JP 09 002 904 A (CHUGAI-PHARM.) 7.Januar 1997

## Beschreibung

Die vorliegende Erfindung betrifft Formulierungen zur dermalen Bekämpfung von parasitierenden Insekten und Milben an Menschen mittels Agonisten oder Antagonisten der nicotinergen Acetylcholinrezeptoren von Insekten.

Agonisten oder Antagonisten der nicotinergen Acetylcholinrezeptoren von Insekten sind bekannt. Zu ihnen gehören die Nicotinyl-Insektizide und ganz besonders die Chlornicotinyl-Insektizide.

Aus der PCT-Anmeldung WO 93/24 002 ist bekannt, daß sich bestimmte 1-[N-(Halo-3-pyridylmethyl)]-N-methylamino-1-alkylamino-2-nitroethylen-Derivate zur systemischen Anwendung gegen Flöhe bei Haustieren eignen. Als ungeeignet zur Bekämpfung der Flöhe an Haustieren wird nach WO 93/24 002 die nichtsystemische d.h. dermale Art der Anwendung dargestellt.

EP-A-682869 beschreibt die Verwendung von Agonisten oder Antagonisten der nicotinergen Acetylcholinrezeptoren von Insekten in der nicht-systemischen, z.B. dermalen Behandlung, von parasitierenden Insekten und Milben an Menschen und Tieren. Die Wirkstoffen können auf verschiedene Weise formuliert werden.

EP-A-45424 beschreibt "pour-on" Formulierungen von zeckenwirksamen Stoffen, die neben den Wirkstoffen Lösungsmitteln wie Propylencarbonat enthalten.

Es wurden nun neue Formulierungen zur dermalen Anwendung von Agonisten oder Antagonisten der nicotinergen Acetylcholinrezeptoren von Insekten gefunden, die sich besonders zur dermalen Bekämpfung parasitierender Insekten und Milben an Menschen eignen.

Die erfindungsgemäßen Formulierungen haben folgende Zusammensetzung:
- Agonisten oder Antagonisten der nicotinergen Acetylcholinrezeptoren von Insekten in einer Konzentration von 0,0001 bis 20 Gew.-% bezogen auf das Gesamtgewicht der Formulierung;
- Lösungsmittel aus der Gruppe cyclischer Carbonate in einer Konzentration von 2,5 bis zu 99,9999 Gew.-% bezogen auf das Gesamtgewicht der Formulierung;
- gegebenenfalls weitere Lösungsmittel aus der Gruppe der Alkohole in einer Konzentration von 0 bis 95 Gew.-% bezogen auf das Gesamtgewicht der Formulierung;
- gegebenenfalls weitere Hilfsmittel aus der Gruppe Verdickungsmittel, Spreitmittel, Farbstoffe, Antioxidantien, Treibmittel, Konservierungsstoffe, Haftmittel, Emulgatoren, in einer Konzentration von 0 bis zu 30 Gew.-% bezogen auf das Gesamtgewicht der Formulierung.

Agonisten oder Antanogisten der nicotinergen Acetylcholinrezeptoren von Insekten sind bekannt z.B. aus Europäische Offenlegungsschriften Nr. 580 553, 464 830, 428 941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Auf die in diesen Publikationen beschriebenen Verbindungen und ihre Herstellung wird hiermit ausdrücklich Bezug genommen.

Diese Verbindungen lassen sich bevorzugt durch die allgemeine Formel (I) wiedergeben 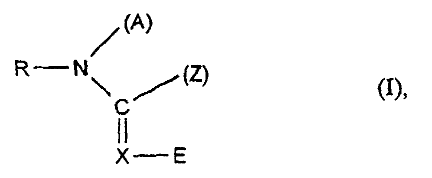 in welcher
- R: für Wasserstoff, gegebenenfalls substituierte Reste der Gruppe Acyl, Alkyl, Aryl, Aralkyl, Heteroaryl oder Heteroarylalkyl steht;
- A: für eine monofunktionelle Gruppe aus der Reihe Wasserstoff, Acyl, Alkyl, Aryl steht oder für eine bifunktionelle Gruppe steht, die mit dem Rest Z verknüpft ist;
- E: für einen elektronenziehenden Rest steht;
- X: für die Reste -CH= oder =N- steht, wobei der Rest -CH= anstelle eines H-Atoms mit dem Rest Z verknüpft sein kann;
- Z: für eine monofunktionelle Gruppe aus der Reihe Alkyl, -O-R, -S-R, 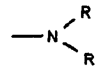 steht
oder für eine bifunktionelle Gruppe steht, die mit dem Rest A oder dem Rest X verknüpft ist.

Besonders bevorzugt sind Verbindungen der Formel (I), in welcher die Reste folgende Bedeutung haben:
- R: steht für Wasserstoff sowie für gegebenenfalls substituierte Reste aus der Reihe Acyl, Alkyl, Aryl, Aralkyl, Heteroaryl, Heteroarylalkyl.
Als Acylreste seien genannt Formyl, Alkylcarbonyl, Arylcarbonyl, Alkylsulfonyl, Arylsulfonyl, (Alkyl-)-(Aryl-)-phosphoryl, die ihrerseits substituiert sein können.
Als Alkyl seien genannt C₁₋₁₀-Alkyl, insbesondere C₁₋₄-Alkyl, im einzelnen Methyl, Ethyl, i-Propyl, sec.- oder t.-Butyl, die ihrerseits substituiert sein können.
Als Aryl seien genannt Phenyl, Naphthyl, insbesondere Phenyl.
Als Aralkyl seien genannt Phenylmethyl, Phenethyl.
Als Heteroaryl seien genannt Heteroaryl mit bis zu 10 Ringatomen und N, O, S insbesondere N als Heteroatomen. Im einzelnen seien genannt Thienyl, Furyl, Thiazolyl, Imidazolyl, Pyridyl, Benzthiazolyl.
Als Heteroarylalkyl seien genannt Heteroarylmethyl, Heteroarylethyl mit bis zu 6 Ringatomen und N, O, S, insbesondere N als Heteroatomen.
Als Substituenten seien beispielhaft und vorzugsweise aufgeführt: Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Fluor, Chlor und Brom; Cyano; Nitro; Amino; Monoalkylund Dialkylamino mit vorzugsweise 1 bis 4, insbesondere 1 oder 2 Kohlenstoffatomen je Alkylgruppe, wie Methylamino, Methyl-ethyl-amino, n- und i-Propylamino und Methyl-n-butylamino; Carboxyl; Carbalkoxy mit vorzugsweise 2 bis 4, insbesondere 2 oder 3 Kohlenstoffatomen, wie Carbomethoxy und Carboethoxy; Sulfo (-SO₃H); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl sowie Heteroarylamino und Heteroarylalkylamino wie Chlorpyridylamino und Chlorpyridylmethylamino.
- A: steht besonders bevorzugt für Wasserstoff sowie für gegebenenfalls substituierte Reste aus der Reihe Acyl, Alkyl, Aryl, die bevorzugt die bei R angegebenen Bedeutungen haben. A steht ferner für eine bifunktionelle Gruppe. Genannt sei gegebenenfalls substituiertes Alkylen mit 1-4, insbesondere 1-2 C-Atomen, wobei als Substituenten die weiter oben aufgezählten Substituenten genannt seien und wobei die Alkylengruppen durch Heteroatome aus der Reihe N, O, S unterbrochen sein können.
- A und Z: können gemeinsam mit den Atomen, an welche sie gebunden sind, einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei Alkyl der N-Alkyl-Gruppe vorzugsweise 1 bis 4, insbesondere 1 oder 2 Kohlenstoffatome enthält. Als Alkyl seien Methyl, Ethyl, n- und iPropyl und n-, i- und t-Butyl genannt. Der heterocyclische Ring enthält 5 bis 7, vorzugsweise 5 oder 6 Ringglieder.
Als Beispiele für den heterocyclischen Ring seien Imidazolidin, Pyrrolidin, Piperidin, Piperazin, Hexamethylenimin, Hexahydro-1,3,5-triazin, Hexahydrooxodiazin, Morpholin genannt, die gegebenenfalls bevorzugt durch Methyl substituiert sein können.
- E: steht für einen elektronentziehenden Rest, wobei insbesondere NO₂, CN, Halogenalkylcarbonyl wie 1,5-Halogen-C₁₋₄-carbonyl, insbesondere COCF₃ genannt seien.
- X: steht für -CH= oder -N=
- Z: steht für gegebenenfalls substituierte Reste Alkyl, -OR, -SR, -NRR, wobei R und die Substituenten bevorzugt die oben angegebene Bedeutung haben.
- Z: kann außer dem obengenannten Ring gemeinsam mit dem Atom, an
welches es gebunden ist und dem Rest 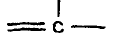 an der Stelle von X einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei die Alkyl oder N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.
Als Beispiele für den heterocyclischen Ring seien Pyrrolidin, Piperidin, Piperazin, Hexamethylenimin, Morpholin und N-Methylpiperazin genannt.

Als ganz besonders bevorzugt erfindungsgemäß verwendbare Verbindungen seien Verbindungen der allgemeinen Formeln (II) und (III) genannt: 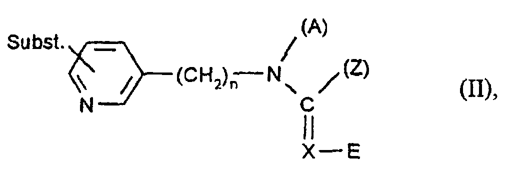 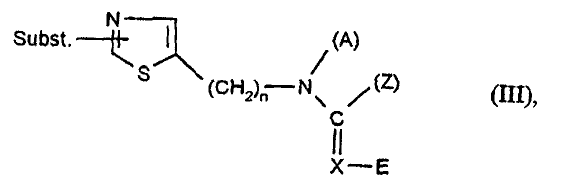 in welchen
- n: für 1 oder 2 steht,
- Subst.: für einen der oben aufgeführten Substituenten, insbesonders für Halogen, ganz besonders für Chlor, steht,
- A, Z, X und E: die oben angegebenen Bedeutungen haben,

Im einzelnen seien folgende Verbindungen genannt:

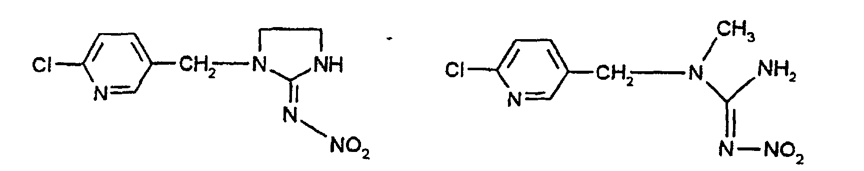

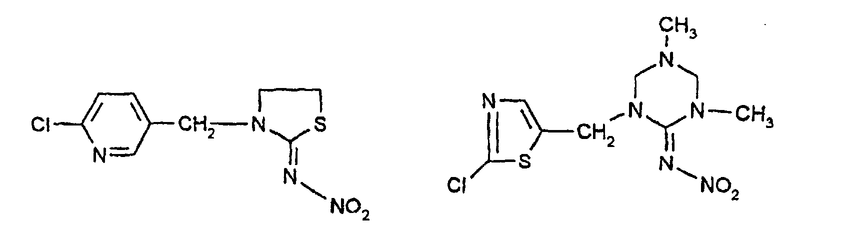

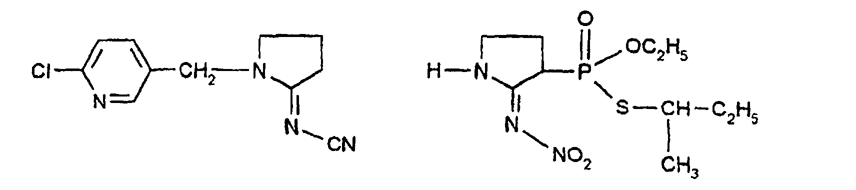

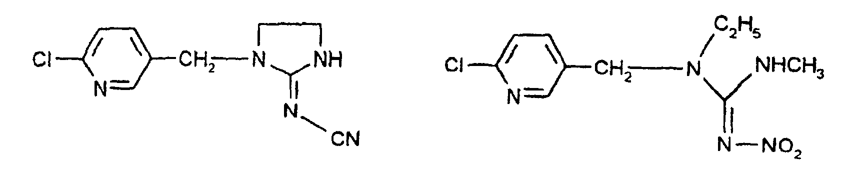

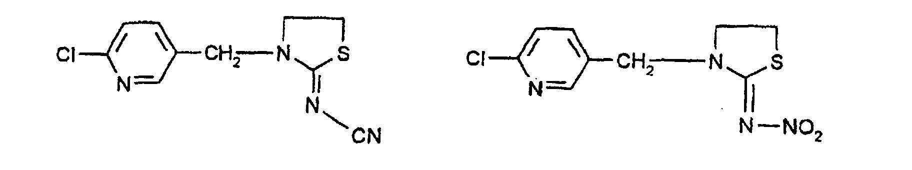

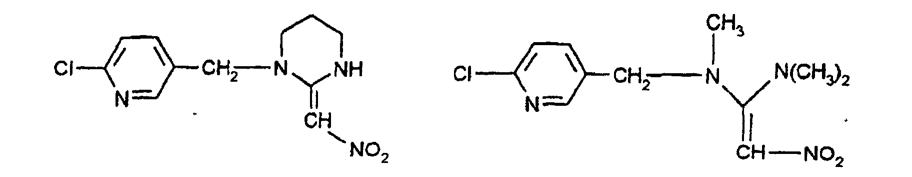

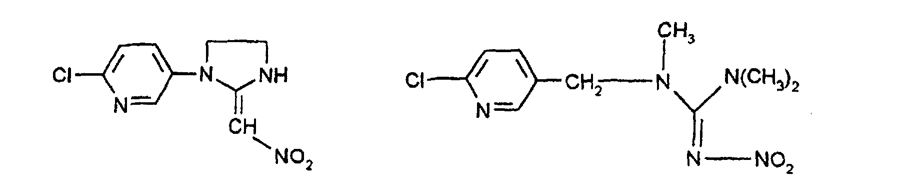

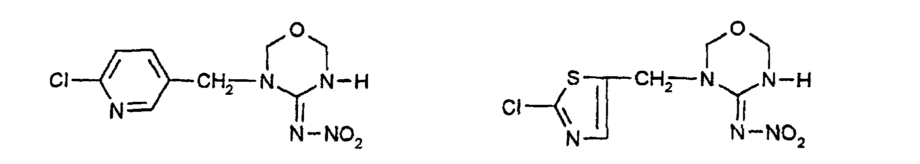

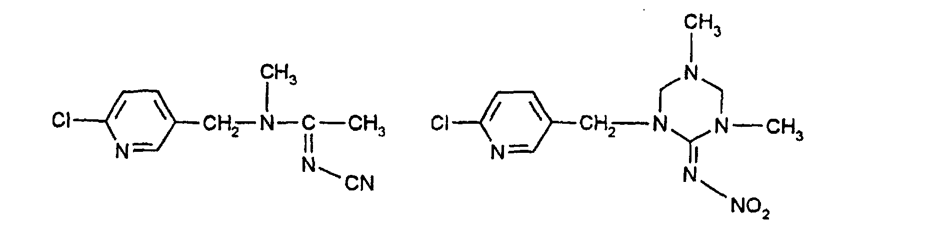

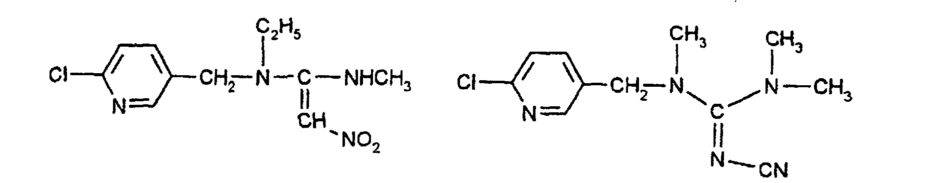

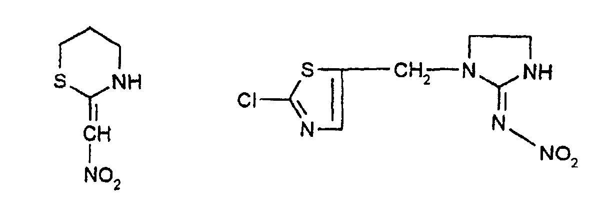

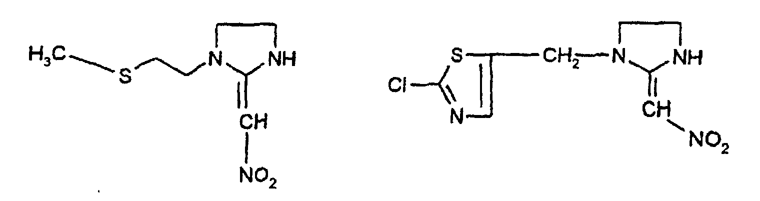

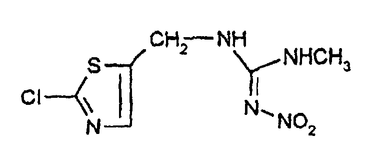

Die erfindungsgemäßen Formulierungen enthalten den Wirkstoff in Konzentrationen von 0,0001 bis 20 Gew.-%, bevorzugt von 0,1 bis 12,5 Gew.-%, besonders bevorzugt von 1 bis 10 %.

Zubereitungen die vor Anwendung verdünnt werden, enthalten den Wirkstoff in Konzentrationen von 0,5 bis 90 Gew.-%, bevorzugt von 1 bis 50 Gew.-%.

Als Lösungsmittel kommen in Frage: Wasser, cyclische Carbonate. Bevorzugte cyclische Carbonate sind Ethylencarbonat, Propylencarbonat. Besonders bevorzugt ist Propylencarbonat.

Sie liegen vor in einer Konzentration von 2,5 bis zu 99,9999 Gew.-%, bevorzugt von 7,5 bis 90 Gew.-%, besonders bevorzugt von 10 bis 90 Gew.-%.

Als weitere Lösungsmittel kommen in Frage: Cyclische und acyclische Alkohole wie Isopropanol, Ethanol, Diethylenglykol, 2-Octyl-1-dodecanol und Tetrahydrofurfurylalkohol.

Sie liegen vor in einer Konzentration von mindestens 0 bis 95 Gew.-%, bevorzugt 5 bis 30 Gew.-%, besonders bevorzugt 5 bis 20 Gew.-%.

Als weitere Hilfsmittel kommen in Frage: Konservierungsmittel wie Benzylalkohol (nicht erforderlich falls bereits als Lösungsmittel vorhanden), Trichlorbutanol, p-Hydroxybenzoesäureester, n-Butanol und Wasser als Löslichkeitsverbesserer.

Sie liegen vor in einer Konzentration von 0 bis 15 Gew.-%, bevorzugt 2,5 bis 12,5 Gew.-%, besonders bevorzugt 2,5 bis 10,0 Gew.-%.

Die Summe von Wirkstoffen, Lösungsmitteln und Hilfsmitteln muß 100 Gew.-% betragen.

Verdickungsmittel sind z.B. anorganische Verdickungsmittel wie Bentonite, kolloidale Kieselsäure, Aluminiummonostearat, organische Verdickungsmittel wie Cellulosederivate, Polyvinylalkohole, Polyvinylpyrrolidone und deren Copolymere, Acrylate und Methacrylate.

Als Farbstoffe seien genannt alle zur Herstellung von Arzneimitteln zugelassenen Farbstoffe, die gelöst oder suspendiert sein können.

Als Hilfsstoffe seien genannt spreitende Öle wie Adipinsäure-di-2-ethylhexylester, Isopropylmyristat, Dipropylenglykolpelargonat, cyclische und acyclische Silikonöle wie Dimetikone und ferner deren Co- und Terpolymerisate mit Ethylenoxid, Propylenoxid und Formalin, Fettsäureester, Triglyceride, Fettalkohole.

Antioxidantien sind z.B. Sulfite oder Metabisulfite wie Kaliummetabisulfit, Ascorbinsäure, Butylhydroxytoluol, Butylhydroxyanisol, Tocopherol.

Lichtschutzmittel sind z.B. Stoffe aus der Klasse der Benzophenone oder Novantisolsäure.

Haftmittel sind z.B. polymere Verdickungsmittel, z.B. Cellulosederivate, Stärkederivate, Polyacrylate, natürliche Polymere wie Alginate, Gelatine.

Hilfsstoffe sind auch Emulgatoren wie nichtionogene Tenside, z.B. polyoxyethyliertes Rizinusöl, polyoxyethyliertes Sorbitan-monooleat, Sorbitanmonostearat, Glycerinmonostearat, Polyoxyethylstearat, Alkylphenolpolyglykolether;
ampholytische Tenside wie Di-Na-N-lauryl-β-iminodipropionat oder Lecithin;
anionaktive Tenside, wie Na-Laurylsulfat, Fettalkoholethersulfate, Mono/Dialkylpolyglykoletherorthophosphor-säureester-monoethanolaminsalz;
kationaktive Tenside wie Cetyltrimethylammoniumchlorid.

Weitere Hilfsstoffe sind Mittel mit denen die erfindungsgemäßen Formulierungen auf die Haut gesprüht oder gespritzt oder gerieben werden können. Dabei handelt es sich um die für Spraydosen benötigten üblichen Treibgase wie Propan, Butan, Dimethylether, CO₂ oder halogenierte Niedrigalkane, bzw. deren Mischungen untereinander.

Die erfindungsgemäßen Formulierungen eignen sich bei günstiger Warmblütertoxizität zur Bekämpfung von parasitierenden Insekten, die am Menschen vorkommen. Sie sind dabei gegen alle oder einzelne Entwicklungsstadien der Schädlinge sowie gegen resistente und normal sensible Arten der Schädlinge wirksam.

Zu den Schädlingen gehören:
Aus der Ordnung der Anoplura z.B. Pediculus spp., Pthirus spp.;

Aus der Ordnung der Siphonaptera z.B. Ctenocephalides spp., Echidnophaga spp., Ceratophyllus spp..

Besonders hervorgehoben sei die Wirkung gegen Anoplura und Siphonaptera. In diesem Zusammenhang sei die Wirkung gegen Pediculus humanus capitis (Kopflaus), Pediculus humanus corporis (Kleiderlaus) und Phthirus pubis (Filzlaus) erwähnt.

Die Wirkung gegen Milben der Ordnung Astigmata, insbesondere der Familien Listrophoridae, Psoroptidae sowie der Gattung Sarcoptes sei erwähnt.

Die Anwendung gegen Sabgeineus und ferner die Wirkung gegen Zecken wie Ixodes ricinus und Rhipicepholus kann sowohl prophylaktisch als auch therapeutisch erfolgen.

Die erfindungsgemäßen Formulierungen können zusätzlich Juvenilhormone oder juvenilhormonartige Substanzen wie z.B. Diarylether, Benzoylharnstoffe oder Triazine enthalten. Hierzu gehören insbesondere Verbindungen der folgenden Formeln:

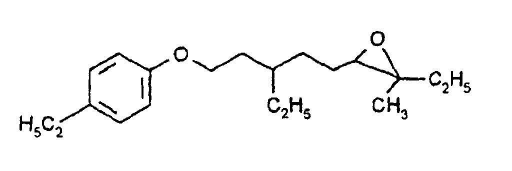

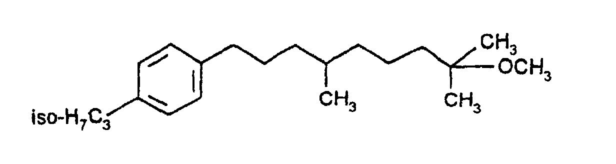

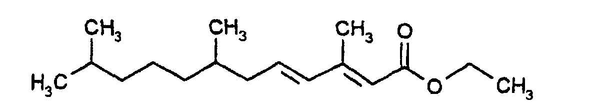

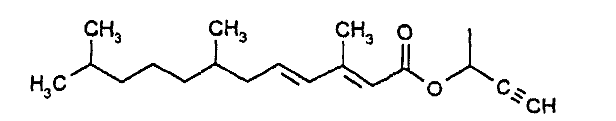

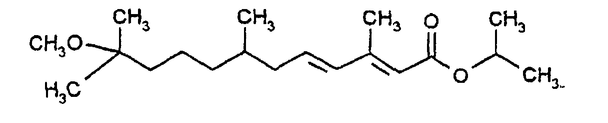

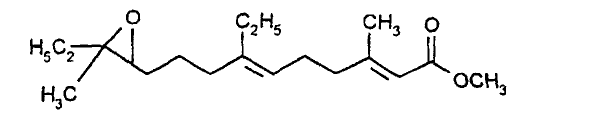

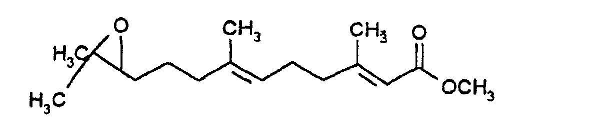

Zu den substituierten Diarylethern gehören insbesondere

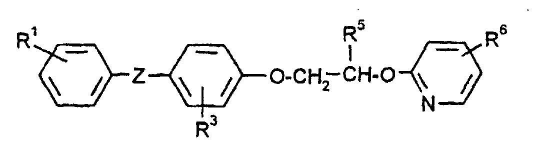

| R¹ | R³ | R⁵ | R⁶ | Z |
|---|---|---|---|---|
| H | H | CH₃ | H | O |
| H | H | CH₃ | 2-C1 | O |
| 5-F | H | CH₃ | H | O |
| H | H | CF₃ | H | O |
| H | H | C₂H₅ | H | O |
| H | H | H | H | O |
| H | H | CH₃ | H | CH₂ |
| H | H | CH₃ | H | C(CH₃)₂ |

Zu den Benzoylhamstoffen gehören Verbindungen der Formel

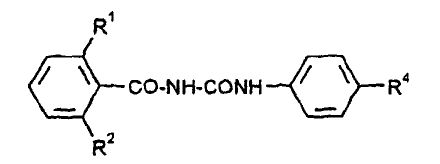

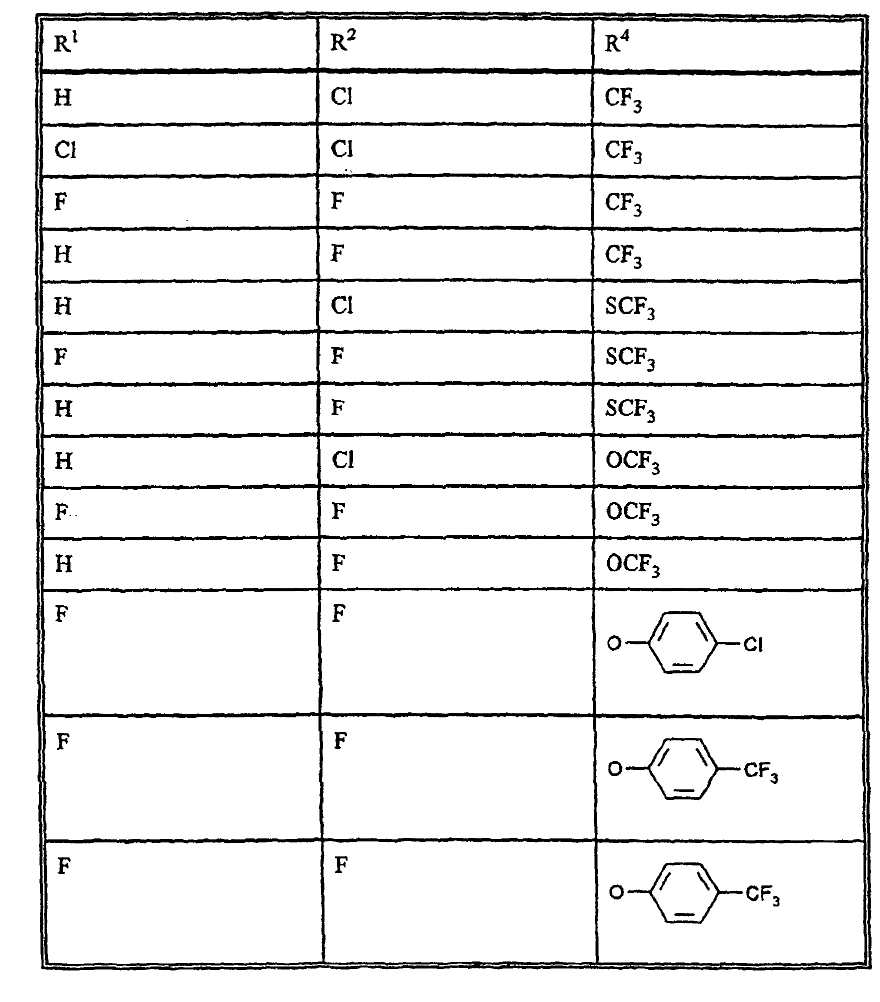

Zu den Triazinen gehören Verbindungen der Formel

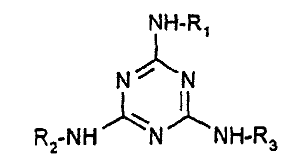

| R₁ | R₂ | R₃ |
|---|---|---|
| Cyclopropyl | H | H |
| Cyclopropyl | H | CH₃ |
| Cyclopropyl | H | C₂H₅ |
| Cyclopropyl | H | C₃H₇-n |
| Cyclopropyl | H | C₄H₉-n |
| Cyclopropyl | H | C₅H₁₁-n |
| Cyclopropyl | H | C₆H₁₃-n |
| Cyclopropyl | H | C₇H₁₅-n |
| Cyclopropyl | H | C₈H₁₇-n |
| Cyclopropyl | H | C₁₂-H₂₅-n |
| Cyclopropyl | H | CH₂-C₄H₉-n |
| Cyclopropyl | H | CH₂CH(CH₃)C₂H₅ |
| Cyclopropyl | H | CH₂CH=CH₂ |
| Cyclopropyl | Cl | C₂H₅ |
| Cyclopropyl | Cl | C₆H₁₃-n |
| Cyclopropyl | Cl | C₈H₁₇-n |
| Cyclopropyl | Cl | C₁₂H₂₅-n |
| Cyclopropyl | H | Cyclopropyl |
| Cyclopropyl | H | COCH₃ |
| Cyclopropyl | H | COCH₃·HCl |
| Cyclopropyl | H | COC₂H₅·HCl |
| Cyclopropyl | H | COC₂H₅ |
| Cyclopropyl | H | COC₃H₇-n |
| Cyclopropyl | H | COC₃H₇-i |
| Cyclopropyl | H | COC₄H₉-t HCl |
| Cyclopropyl | H | COC₄H₉-n |
| Cyclopropyl | H | COC₆H₁₃-n |
| Cyclopropyl | H | COC₁₁-H₂₃-n |
| Cyclopropyl | COCH₃ | COC₂H₅ |
| Cyclopropyl | COC₃H₇-n | COC₆H₁₃-n |
| Cyclopropyl | COCH₃ | COC₃H₇-n |
| Cyclopropyl | COC₂H₅ | COC₃H₇-n |
| Cyclopropyl | H | COCyclopropyl |
| Cyclopropyl | COCyclopropyl | COCyclopropyl |
| Cyclopropyl | COCH₃ | COCH₃ |
| Isopropyl | H | H |
| Isopropyl | H | COCH₃ |
| Isopropyl | H | COC₃H₇-n |
| Cyclopropyl | H | CONHCH₃ |
| Cyclopropyl | H | CONHC₃H₇-i |
| Cyclopropyl | CONHCH₃ | CONHCH₃ |
| Cyclopropyl | H | SCNHCH₃ |
| Cyclopropyl | H | CONHCH₂CH=CH₂ |
| Cyclopropyl | CONHCH₂CH=CH₂ | CONHCH₂CH=CH₂ |
| Cyclopropyl | CSNHCH₃ | CSNHCH₃ |

Die Menge der zusätzlichen Wirkstoffe kann 0 bis 10 Gew.-%, bezogen auf die gesamte Formulierungsmasse, vorzugsweise bis zu 7,5 %, besonders bevorzugt bis zu 5,0 % betragen.

Als erfindungsgemäß verwendbare Wirkstoffe seien genannt Imidacloprid, AKD 1022 und Ti 435.

AKD 1022 ist ein Chlomicotinylderivat mit der Formel

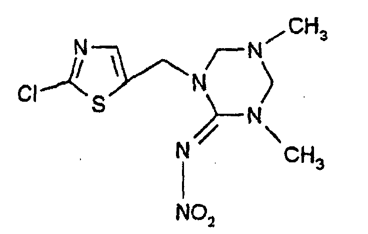

Ti 435 ist ein Chlornicotinylderivat mit der Formel

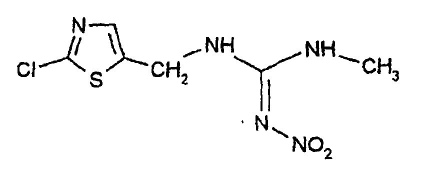

In den folgenden Beispielen wird als Wirkstoff 1-[(6-Chlor-3-pyridinyl)methyl]-4,5-dihydro-N-nitro-1H-imidazol-2-amin (common name Imidacloprid), eingesetzt.

### Beispiel 1

| | |
|---|---|
| Imidacloprid | 5 g |
| Propylencarbonat | 75 g |
| Isopropanol | 19 g |
| ®Belsil DMC 6031 | 1 g |
| (Ein Polysiloxancopolymerisat der Fa. Wacker GmbH, D-81737 München) | |

### Beispiel 2

| | |
|---|---|
| Imidacloprid | 10 g |
| Propylencarbonat | 89 g |
| ®Belsil L 066 | 1 g |
| (Ein Polysiloxancopolymerisat der Fa. Wacker GmbH, D-81737 München) | |

### Beispiel 3

| | |
|---|---|
| Imidacloprid | 8,5 g |
| Ethanol | 30,0 g |
| Ethylencarbonat | 60,5 g |
| ®Belsil L 066 | 1 g |
| (Polysiloxancopolymerisat als Spreitmittel) | |

### Beispiel 4

| | |
|---|---|
| Imidacloprid | 10 g |
| Tetrahydrofurfurylalkohol | 30,0 g |
| Propylencarbonat | 59,9 g |
| ®Belsil DMC 6031 | 0,1 g |
| (Polysiloxancopolymerisat als Spreitmittel) | |

### Beispiel 5

| | |
|---|---|
| AKD 1022 | 7,5 g |
| Isopropanol | 70,0 g |
| Propylencarbonat | 22,5 g |

### Beispiel 6

| | |
|---|---|
| Ti 435 | 10,0 g |
| Propylencarbonat | 80,0 g |
| 2-Octyl-1-dodecanol | 10,0 g |

### Beispiel 7

| | |
|---|---|
| Imidacloprid | 7,0 g |
| Propylencarbonat | 89,0 g |
| Isopropylmyristat | 4,0 g |

### Beispiel 8

| | |
|---|---|
| Imidacloprid | 12,5 g |
| Benzylalkohol | 70,0 g |
| Propylencarbonat | 17,4 g |
| Butylhydroxytoluol | 0,1 g |

### Beispiel 9

| | |
|---|---|
| Imidacloprid | 5,0 g |
| Ethanol | 22,5 g |
| Propylencarbonat | 70 g |
| Adipinsäure-di-2-ethylhexylester | 2,5 g |

### Beispiel 10

| | |
|---|---|
| Imidacloprid | 2,5 g |
| Isopropanol | 60,0 g |
| Propylencarbonat | 37,5 g |

### Beispiel 11

| | |
|---|---|
| Imidacloprid | 2,5 g |
| Pyriproxyfen | 1,0 g |
| Isopropanol | 70,0 g |
| Propylencarbonat | 26,4 g |
| Butylhydroxytoluol | 0,1 g |

### Beispiel 12

Eine Sprayformulierung bestehend aus

| | |
|---|---|
| Imidacloprid | 2,5 g |
| Isopropanol | 12,5 g |
| Propylencarbonat | 60,0 g |
| Propan/Butan (15:85) | 25,0 g |

### Beispiel 13

Eine Sprayformulierung bestehend aus

| | |
|---|---|
| Imidacloprid | 2,5 g |
| Ethanol | 40,0 g |
| Propylencarbonat | 50,0 g |
| CO₂ | 7,5 g |

### Beispiel 14

Eine Sprayformulierung bestehend aus

| | |
|---|---|
| Imidacloprid | 2,5 g |
| Ethylencarbonat | 15,0 g |
| Propylencarbonat | 15,0 g |
| Ethanol | 20,0 g |
| Diethylether | 47,5 g |

### Anwendungsbeispiel A

2 ml der in Beispiel 1 bis 11 beschriebenen Formulierung wurde ca. 20 kg schweren Hunden, die mit Kopfläusen infestiert waren, auf den Rücken gegossen. Es wurden folgende Ergebnisse erhalten:

Das Gewicht dieser Tiere ist vergleichbar mit dem Gewicht von 6- bis 8-jährigen Kindern.

| Zeitraum Tag | Anzahl der Läuse pro Hund | | % Wirkung |
|---|---|---|---|
| | unbehandelt | behandelt | |
| -1 Infestation mit 100 Läusen | | | |
| 0 Behandlung und Zählung | 35 | 0 | 100 |
| 5, 8 Infestation mit 100 Läusen | | | |
| 9 Zählung | 53 | 0 | 100 |
| 15 Infestation mit 100 Läusen | | | |
| 16 Zählung | 79 | 0 | 100 |
| 19 Infestation mit 100 Läusen (unbehandeltes Tiere) 250 Läusen (behandelte Tiere) | | | |
| 20 Zählung | 45 | 0 | 100 |
| 26 Infestation mit 100 Läusen | | | |
| 27 Zählung | 42 | 0 | 100 |

Aus den toxikologischen Untersuchungen geht hervor, daß diese Formulierungen bei Ratten und Kaninchen nicht zu Hautreizungen führen.

Die LD₅₀-Werte der Formulierungen liegen bei > 1.800 mg/kg. Sie weisen ein hervorragendes Spreitverhalten auf dem Tierfell auf. Die Formulierungen lassen damit hervorragende Ergebnisse auch beim Menschen erwarten.

### Anwendungsbeispiel B

2 ml der Lösung gemäß Beispielen 12 bis 14 wurden auf die Schulter eines 20 kg schweren Hundes gesprüht. Das Tier wurde nach 2 und nach 6 Tagen der Behandlung mit 200 Läusen infestiert. Jeweils am Tag 3 und am Tag 7 nach Behandlung wurden die am Hund verbliebenen Läuse gezählt. Es konnten keine lebenden Läuse gefunden werden. Die Wirkung war 100 %.

Aus den toxikologischen Untersuchungen geht hervor, daß diese Formulierungen bei Ratten und Kaninchen nicht zu Hautreizungen führen. Ihr Spreitverhalten auf dem Tierfell und menschlicher Haut ist hervorragend.

## Patentansprüche

1. Mittel zur dermalen Bekämpfung von parasitierenden Insekten und Milben an Menschen, **gekennzeichnet durch** einen Gehalt an
- Agonisten oder Antagonisten der nicotinergen Acetylcholinrezeptoren von Insekten in einer Konzentration von 0,0001 bis 20 Gew.-% bezogen auf das Gesamtgewicht der Formulierung;
- Lösungsmittel aus der Gruppe cyclischer Carbonate in einer Konzentration von 2,5 bis zu 99,9999 Gew.-% bezogen auf das Gesamtgewicht der Formulierung;
- gegebenenfalls weitere Lösungsmittel aus der Gruppe der Alkohole in einer Konzentration von 0 bis 95 Gew.-% bezogen auf das Gesamtgewicht der Formulierung;
- gegebenenfalls weitere Hilfsmittel aus der Gruppe Verdickungsmittel, Spreitmittel, Farbstoffe, Antioxidantien, Treibmittel, Konservierungsstoffe, Haftmittel, Emulgatoren, in einer Konzentration von 0 bis zu 30 Gew.-% bezogen auf das Gesamtgewicht der Formulierung.

2. Verfahren zur Herstellung der Mittel gemäß Anspruch 1, **dadurch gekennzeichnet, dass** man den Wirkstoff mit dem oder den angegebenen Lösungsmitteln vermischt und gegebenenfalls die weiteren Hilfsstoffe zusetzt.

3. Verwendung von Agonisten oder Antagonisten der nicotinergen Acetylcholinrezeptoren von Insekten zur Herstellung von Mitteln gemäß Anspruch 1 zur dermalen Bekämpfung von parasitierenden Insekten und Milben an Menschen.

## Claims

1. Compositions for the dermal control of parasitic insects and mites on humans, **characterized in that** they contain
- agonists or antagonists of the nicotinergic acetylcholine receptors of insects in a concentration of from 0.0001 to 20% by weight based on the overall weight of the formulation;
- solvents from the group of the cyclic carbonates in a concentration of from 2.5 to 99.9999% by weight based on the overall weight of the formulation;
- if desired, further solvents from the group of the alcohols in a concentration of from 0 to 95% by weight based on the overall weight of the formulation;
- if desired, further auxiliaries from the group of the thickeners, spreading agents, colorants, antioxidants, propellants, preservatives, adhesives, emulsifiers, in a concentration of from 0 up to 30% by weight based on the overall weight of the formulation.

2. Process for preparing the compositions according to Claim 1, **characterized in that** the active substance is mixed with the stated solvent(s), and the further auxiliaries are added if desired.

3. Use of agonists or antagonists of the nicotinergic acetylcholine receptors of insects for preparing compositions according to Claim 1 for the dermal control of parasitic insects and mites on humans.

## Revendications

1. Agent pour lutter de manière dermique, contre des insectes et acariens parasites pour l'homme, **caractérisé par** une teneur en :
- des agonistes ou antagonistes des récepteurs acétylcholinergiques nicotiniques des insectes en une concentration allant de 0,0001 à 20% en poids, sur base du poids total de la formulation ;
- un solvant du groupe des carbonates cycliques en une concentration allant de 2,5 à 99,9999% en poids, sur base du poids total de la formulation ;
- le cas échéant, un autre solvant du groupe des alcools en une concentration allant de 0 à 95% en poids, sur base du poids total de la formulation ;
- le cas échéant, d'autres auxiliaires du groupe des agent épaississant, agent d'étalement, colorant, antioxydant, propulseur, agent de conservation, adhérent, émulsionnant, en une concentration allant de 0 à 30% en poids, sur base du poids total de la formulation.

2. Procédé de préparation de l'agent selon la revendication 1, **caractérisé en ce que** l'on mélange l'agent actif avec le ou les solvants indiqués et on ajoute, le cas échéant, les autres auxiliaires.

3. Utilisation d'agonistes ou antagonistes des récepteurs acétylcholinergiques nicotiniques des insectes pour la préparation d'un agent suivant la revendication 1, pour la lutte de manière dermique contre des insectes et acariens parasites pour l'homme.
